# EUROPÄISCHE PATENTSCHRIFT

(11) **EP 1 836 417 B1**
(45) Veröffentlichungstag und Bekanntmachung des Hinweises auf die Patenterteilung: **07.05.2008**
(21) Anmeldenummer: 05814050.0
(22) Anmeldetag: 02.12.2005
(51) Int. Cl.: F16H 61/04

(54) **VERFAHREN ZUR STEUERUNG EINES SCHALTGETRIEBES BEI UNPLANMÄSSIGEM MOTORVERHALTEN**
METHOD FOR CONTROLLING A MANUAL TRANSMISSION IN THE EVENT OF A DISORDERLY ENGINE BEHAVIOR
PROCEDE POUR COMMANDER UNE BOITE DE VITESSES DANS LE CAS D'UN COMPORTEMENT MOTEUR INATTENDU

(30) Priorität: 13.01.2005 DE 102005001505
(43) Veröffentlichungstag der Anmeldung: 26.09.2007
(73) Patentinhaber: ZF FRIEDRICHSHAFEN Aktiengesellschaft, 88038 Friedrichshafen (DE)
(72) Erfinder: MERTINKAT, Reinhard, 88441 Mittelbiberach (DE); PETZOLD, Rainer, 88045 Friedrichshafen (DE); WOLF, Andreas, 88213 Ravensburg (DE); SAUERMANN, Gerd, 88677 Markdorf (DE); HENSINGER, Klaus, 88046 Friedrichshafen (DE); GRÖNER, Wolfgang, 88048 Friedrichshafen (DE); REITH, Ulrich, 88281 Schlier (DE)
(86) Internationale Anmeldenummer: PCT/EP2005/012914
(87) Internationale Veröffentlichungsnummer: WO 2006/074758

(56) Entgegenhaltungen:
- DE-A1- 10 122 158
- DE-A1- 10 243 495
- US-B1- 6 319 170

## Beschreibung

Die Erfindung betrifft ein Verfahren zur Steuerung eines ganz oder teilweise unsynchronisierten Schaltgetriebes bei unplanmäßigem Verhalten eines Antriebsmotors gemäß dem Oberbegriff des Patentanspruchs 1.

Schaltgetriebe werden seit geraumer Zeit in unterschiedlichen Kraftfahrzeugtypen genutzt. Da insbesondere Kolbenbrennkraftmaschinen einen relativ begrenzt nutzbaren Drehzahlbereich aufweisen, kommt dem Schaltgetriebe die Aufgabe zu, das Drehzahlverhältnis zwischen der Ausgangswelle einen solchen Antriebsmotor und der Drehzahl der angetriebenen Räder so anzupassen, dass der Antriebsmotor in einem gewünschten Drehzahlbereich betrieben werden kann. Hierzu werden neben sogenannten stufenlosen Getrieben, welche die Einstellung beliebiger Übersetzungsverhältnisse erlauben, hauptsächlich Stufenschaltgetriebe genutzt. Diese zeichnen sich durch eine Anzahl von diskreten Getriebestufen mit jeweils unterschiedlichen Übersetzungsverhältnissen aus.

Bei einem Wechsel einer Getriebestufe und auch beim Einlegen einer Getriebestufe aus dem Leerlauf müssen die beteiligten mechanischen Komponenten, wie z.B. Wellen und/oder Zahnräder, zunächst annähernd auf eine Synchrondrehzahl abgebremst oder beschleunigt werden. Hierzu wird bei geöffneter Kupplung zwischen Antriebsmotor und Getriebe - im Folgenden als Fahrkupplung bezeichnet - das Getriebe zunächst in die Neutralstellung gebracht, sofern zuvor eine Getriebestufe eingelegt war. Anschließend werden die miteinander in Wirkzusammenhang zu bringenden Komponenten auf annähernd die Synchrondrehzahl beschleunigt oder abgebremst.

Da die Drehzahl der Getriebeabtriebsseite zumeist fest mit der Drehgeschwindigkeit der Fahrzeugräder gekoppelt ist, muss hierzu die Drehzahl der Getriebeeingangsseite entsprechend der Drehzahl der Getriebeabgangsseite unter Berücksichtigung des Übersetzungsverhältnisses des einzulegenden Ganges gewählt werden. Während das Abbremsen einer diesbezüglichen Getriebewelle zumeist mittels im Getriebe oder außerhalb des Getriebes angeordneter Bremsen geschieht, kann eine Beschleunigung durch spezielle, vom Antriebsmotor unabhängige Synchronisiervorrichtungen innerhalb des Getriebes erreicht werden, welche jedoch recht aufwändig sind.

Eine Beschleunigung von Getriebebauteilen der Getriebeeingansseite kann jedoch auf besonders einfache Weise durch den Antriebsmotor selbst erfolgen. Hierzu wird ausgehend von einer Neutralstellung des Getriebes die Fahrkupplung zumindest so weit geschlossen, dass ein ausreichend großes Drehmoment vom Antriebsmotor auf die Getriebeeingangswelle übertragen werden kann.

Die Motordrehzahl wird derartig gesteuert, dass die Getriebeeingangswelle entsprechend den Vorgaben beschleunigt wird. Dabei kann die Fahrkupplung schlupffrei geschlossen sein und die Getriebeeingangsdrehzahl durch die Motorsteuerung des Antriebsmotors eingestellt werden. Es ist grundsätzlich auch möglich, dass die Motordrehzahl auf einen höheren Wert als die zur Getriebesynchronisation notwendige Drehzahl eingestellt wird, und die eigentliche Synchronisation der Wellendrehzahlen durch eine entsprechende Steuerung der Fahrkupplung und/oder einer Bremsvorrichtung erfolgt. Entscheidend ist hier lediglich, dass für die Anhebung der Drehzahl von Getriebeteilen zwecks Synchronisierung eine zumindest korrespondierend hohe Drehzahl des Antriebsmotors notwendig ist, und dieser die notwendige kinetische Energie bereitstellt.

Bei solchen zumindest teilweise unsynchronisierten Getrieben kann es vorkommen, dass der Antriebsmotor nicht in der Lage ist, die erforderliche Drehzahl und/oder ein ausreichendes Drehmoment zur Synchronisation des Getriebes zum Einlegen des gewünschten Ganges bereitzustellen. Die möglichen Gründe hierfür sind vielfältig und brauchen an dieser Stelle nicht weiter betrachtet zu werden.

In einem solchen Fall ist das Einlegen des gewünschten Ganges nicht möglich, da die entsprechenden Getriebeteile nicht beschleunigt werden können. Damit verbleibt das Getriebe in der Neutralstellung bzw. es obliegt dem Fahrer, in dieser für ihn überraschenden Situation einen Gang zu wählen, welcher sich durch ein Abbremsen der zu synchronisierenden Getriebeteile einlegen lässt.

Da zu diesem Zeitpunkt die Getriebeeingangsseite vom Antriebsmotor getrennt ist, reduziert sich deren Drehzahl relativ schnell, und es verbleibt dem Fahrer nur eine kurze Zeitspanne für einen derartigen manuellen Schaltversuch. Aus der Sicht des Fahrers eines Fahrzeugs mit automatisiertem Schaltgetriebe schaltet das Getriebe dabei ohne erkennbare Ursache in die Neutralstellung und der Antriebsmotor läuft unrund mit sehr niedriger Drehzahl oder bleibt gar stehen. Ein Fahrer mit einem manuell schaltbaren Getriebe erlebt in einem solchen Betriebsfall, dass bei einem angeforderten Gangwechsel das Getriebe in den Leerlauf schaltet und der Motor das bereits vorstehend beschriebene Verhalten zeigt.

Ein durchschnittlicher Fahrer wird kaum in der Lage sein, in einer derartigen Situation einen zu diesem Zeitpunkt noch schaltbaren Gang zu identifizieren und manuell anzuwählen, so dass in einem solchen Fall das Fahrzeug regelmäßig mit dem Getriebe in der Neutralstellung ausrollt.

Bei bestimmten Störungen des Antriebsmotors wäre es durchaus möglich, mit dem Fahrzeug zumindest noch eine kurze Strecke zu fahren und beispielsweise die nächste Autobahnausfahrt oder Werkstatt zu erreichen, oder zumindest eine Gefahrenzone wie z.B. eine Autobahnauffahrt zu verlassen, wenn nicht beim Wechsel des Getriebeganges in einen niedrigeren Gang aufgrund der nicht zur Verfügung stehenden Drehzahlanhebung bzw. dem nicht ausreichend zur Verfügung stehenden Drehmoment des Antriebsmotors das Getriebe in der Neutralstellung verharren würde.

Zudem gibt es Betriebsfälle, in denen der fehlerhafte Zustand des Antriebsmotors nur für eine kurze Zeit besteht, so dass die Fahrt zunächst fortgesetzt werden kann, wenn es gelingt, den Antriebsmotor für eine gewisse Zeit z.B. durch Zuführung kinetischer Energie von den Fahrzeugrädern über das Schaltgetriebe und die Kupplung zu unterstützen. DE-A-10122158 zeigt die Merkmale des Oberbegriffs des Anspruchs 1.

Vor diesem Hintergrund liegt der Erfindung die Aufgabe zugrunde, ein Steuerungsverfahren für ein zumindest teilweise unsynchronisiertes Schaltgetriebe vorzustellen, welches auch dann ein unbeabsichtigtes Verharren des Getriebes in der Neutralstellung verhindert, wenn der Antriebsmotor nicht in der Lage ist, die zur Synchronisation des Getriebes benötigte Drehzahl bei ausreichendem Drehmoment zur Verfügung zu stellen.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich bei zumindest teilweise unsynchronisierten Getrieben ein ungewolltes Verharren des Getriebes in dessen Neutralstellung aufgrund eines nicht erwartungsgemäß reagierenden Antriebsmotors verhindern lässt, wenn schnell genug ein aufgrund der gegebenen Drehzahlverhältnisse zwischen Getriebeeingangsseite und Getriebeausgangsseite noch schaltbarer Gang eingelegt wird.

Demnach betrifft die Erfindung ein Verfahren zur Steuerung eines zumindest teilweise unsynchronisierten Schaltgetriebes, welches während eines Übersetzungsänderungsvorgangs die Erhöhung einer Drehzahl zumindest eines zu synchronisierenden Getriebeteils dadurch realisiert, dass zumindest ein Element des Schaltgetriebes über eine schaltbare Kupplung mit einem Antriebsmotor verbunden wird, und dieser Antriebsmotor die erforderliche Drehzahl und das benötigte Drehmoment an seiner Abtriebswelle zur Verfügung stellt.

Unter einem zumindest teilweise unsynchronisierten Getriebe soll dabei ein schaltbares Getriebe mit mehreren unterschiedlichen, wahlweise schaltbaren Getriebeübersetzungen verstanden werden, bei dem zumindest bei einem möglichen Schaltvorgang eine Anhebung der Drehgeschwindigkeit zumindest eines Getriebeelementes vorgesehen ist, und bei dem diese Anhebung durch eine Anhebung der Drehzahl des Antriebsmotors und eine Übertragung eines Drehmomentes von der Abtriebswelle des Antriebsmotors auf das zumindest eine Getriebeelement durch eine mechanische Koppelung erfolgt.

In einfachen Worten ausgedrückt wird beispielsweise die Eingangsseite des Getriebes beim Zurückschalten vom dritten in den zweiten Gang so weit durch den Antriebsmotor beschleunigt, dass das Losrad des zweiten Ganges und die das Losrad tragende Getriebewelle mit zumindest annähernd gleicher Drehzahl drehen, und daher ein Koppelmittel zwischen dem Losrad und der Welle ohne größeren Ruck oder hohen Verschleiß geschlossen werden kann.

Zur Lösung der gestellten Aufgabe ist vorgesehen, dass in dem Fall, in dem die vom Antriebsmotor bereitgestellte Drehzahl und/oder das bereitgestellte Drehmoment innerhalb eines festgelegten Zeitraumes nicht ausreicht, um die Synchronisierung des Schaltgetriebes zu gewährleisten, eine Schaltstrategie verfolgt wird, welche ein unbeabsichtigtes Verharren des Getriebes in dessen Neutralstellung verhindert.

Die Entscheidung, dass die vom Antriebsmotor bereitgestellte Drehzahl und/oder das bereitgestellte Drehmoment nicht ausreicht, um die Synchronisierung des Schaltgetriebes zu gewährleisten, kann dabei auf einer Berechnung der notwendigen Drehzahl und einem Vergleich mit der Ist-Drehzahl und/oder durch eine Bewertung einer Änderungsgeschwindigkeit der Drehzahl und/oder durch eine Messung, Abschätzung oder Berechnung des vom Antriebsmotor bereitgestellten Drehmomentes und einem Vergleich mit einem festgelegten oder abgeschätzten Referenzwert erfolgen. In diesen Fällen wird die Erreichung von Antriebsmotorwerten überwacht, welche tatsächlich auch einen entsprechenden Schaltvorgang des Getriebes im Normalbetrieb erlauben.

In vielen Fällen genügt jedoch eine einfache Überprüfung, ob der Antriebsmotor qualitativ erwartungsgemäß reagiert. Diese kann beispielsweise aus einer Überwachung des Drehzahlverlaufes über einen festgelegten Zeitraum bestehen. Hierbei muss im einfachsten Fall lediglich entschieden werden, ob nach einer festgelegten verstrichenen Zeitspanne die Drehzahl des Motors um zumindest einen vorgegebenen absoluten oder relativen Betrag oberhalb der Ausgangsdrehzahl liegt.

Alternativ kann in Abhängigkeit vom gewählten Gang und der bekannten Fahrzeuggeschwindigkeit die erforderliche Motordrehzahl berechnet oder aus einer Tabelle ausgelesen und die Erreichung dieser Drehzahl überwacht werden.

Dabei kann der festgelegte Zeitraum im einfachsten Fall ein konstanter Wert sein, nach welchem bei ordnungsgemäß funktionierendem Antriebsmotor eine entsprechende Änderung der Antriebsmotorwerte spätestens zu erwarten ist. Der Zeitraum kann jedoch bei Bedarf z. B. in Abhängigkeit von dem zu schaltenden Getriebegang und/oder von der Temperatur des Motors und/oder des Getriebes sowie von weiteren Parametern abhängig gemacht werden.

In einer bevorzugten Ausführungsform der Erfindung wird innerhalb dieser Schaltstrategie ausgehend von den aktuellen Drehzahlverhältnissen an der Eingangswelle und der Ausgangswelle des Schaltgetriebes ein noch schaltbarer Gang ermittelt und dieser Gang eingelegt.

Durch dieses Verfahren wird erreicht, dass auch dann, wenn die vom Antriebsmotor bereitgestellte Drehzahl und/oder das bereitgestellte Drehmoment nicht für den geplanten Gangwechsel ausreichen, trotzdem ein Ausdrehen der Getriebeeingangsseite in der Neutralstellung des Getriebes vermieden wird. Damit ist es z.B. möglich, im Fahrzeug gespeicherte kinetische Energie von den Rädern über Getriebe und Fahrkupplung an den Antriebsmotor zu übertragen und diesen somit kurzzeitig zu unterstützen und/oder in einen Drehzahlbereich zu bringen, in dem dieser trotz der Fehlfunktion noch in der Lage ist, Leistung an Nebenverbraucher wie beispielsweise eine Lenkhilfepumpe abzugeben.

Gemäß einer anderen Variante des Verfahrens kann vorgesehen sein, dass das Drehzahlfenster, in welchem das Einlegen eines Ganges erlaubt wird, gegenüber dem Normalbetrieb vergrößert wird, und insbesondere das Einlegen eines Ganges bei einer niedrigeren Drehzahl der Getriebeeingangswelle erlaubt wird, als dies im Normalbetrieb der Fall wäre.

Bei der Schaltstrategie gemäß Anspruch 1 handelt es sich nicht um einen Normalbetrieb des Fahrzeugs, sondern um eine Strategie, die es trotz einer erheblichen Störung ermöglichen soll, die Fahrt zunächst fortzusetzen, oder zumindest um eine kurze Fahrstrecke zu verlängern, um z.B. einen Gefahrenbereich verlassen zu können. Daher ist es gerechtfertigt, von den im Normalbetrieb geltenden Vorgaben bezüglich Verschleiß und Fahrkomfort abzuweichen, um durch eine Vergrößerung des Drehzahlfensters, in welchem das Einlegen eines Ganges erlaubt wird, die Chancen für das Einlegen des Zielganges oder zumindest zum Einlegen eines dem Zielgang benachbarten Ganges zu erhöhen.

Weiter ist es vorteilhaft, wenn ein darüber hinausgehender erneuter Gangwechsel durch den Fahrer zumindest gegenüber dem Normalbetrieb zumindest erschwert und/oder ganz unterbunden wird.

Der Fahrer wird bei Aktivierung dieses Verfahrens zunächst entweder einen ungewohnt starken Schaltruck bzw. ein wahrnehmbares Schaltgeräusch und/oder ein für ihn im Vergleich zu ähnlichen Fahrsituationen ungewohntes Motorgeräusch bzw. Fahrverhalten bemerken. Es liegt für diesen daher nahe, den vermuteten Schaltfehler durch einen abermaligen schaltvorgang korrigieren zu wollen, oder das ungewohnte Verhalten durch einen abermaligen Schaltvorgang zu verifizieren. Dies kann durch einen manuellen Schaltbefehl geschehen, ausgelöst z.B. über die Betätigung eines Fahrschalters oder über eine manuelle Schaltung, oder bei Fahrt im Automatikbetrieb durch eine entsprechende Betätigung des Fahrpedals oder des Bremspedals. Dieses Verhalten ist in einer derartigen Situation nicht erwünscht, da ein wiederholter Schaltvorgang innerhalb kurzer Zeit eventuell auch von dem erfindungsgemäßen Schaltverfahren nicht mehr zielführend beherrschbar wäre.

Die Erschwerung des oben genannten Gangwechsels kann beispielsweise in einer Sperrung oder Entkoppelung des Fahrschalters oder des Bedienelements bestehen. Bei Fahrzeugen mit vollautomatisch schaltendem Getriebe kann vorgesehen sein, dass die Drehzahlbereiche bzw. Fahrgeschwindigkeitsbereiche der Gänge ausgeweitet werden. Bevorzugt wird dabei jedoch stets sichergestellt, dass das Fahrzeug problemlos gebremst und zum Stillstand gebracht werden kann.

Während also ein Gangwechsel nach Möglichkeit vermieden wird, kann der Antriebsstrang bzw. die Kupplung automatisch geöffnet werden, wenn das Fahrzeug eine von mehreren Grenzgeschwindigkeiten unterschreitet und/oder die Bremsstärke einen vorgegebenen Wert überschreitet. Die Grenzgeschwindigkeit kann dabei absolut festgelegt sein und im einfachsten Fall nahezu dem Stillstand des Fahrzeugs entsprechen. Sinnvoller ist jedoch eine Festlegung der Grenzgeschwindigkeit in Abhängigkeit vom eingelegten Gang und eventuell weiteren Parametern. Die Bremsstärke kann beispielsweise durch einen Verzögerungssensor oder durch den Bremsdruck erfasst werden. Besonders einfach ist jedoch die Ermittlung aus dem zeitlichen Verlauf der ohnehin vorliegenden Drehzahlwerte der Getriebeausgangswelle oder, unter Berücksichtigung des eingelegten Ganges, der Drehzahl des Motors oder der Getriebeeingangswelle.

Zur Überprüfung, ob wieder in den Normalbetrieb zurückgekehrt werden kann und um einen für Motor und/oder Personen gefährlichen Betrieb des Fahrzeugs zu verhindern, ist gemäß einer weiteren Ausführungsform vorgesehen, dass in einem sicheren Fahrzeugbetriebszustand der Antriebsstrang geöffnet wird, durch eine erneute Beschleunigungsanforderung an den Antriebsmotor überprüft wird, ob der Antriebsmotor zur Synchronisation des Getriebes ausreichend reagiert, und dass bei nicht ausreichender Reaktion des Antriebsmotors auf die Beschleunigungsanforderung ein erneutes Anfahren des Fahrzeugs unterbunden wird.

Die Unterbindung kann dabei absolut sein und z.B. durch Unterbrechung der Zündung, Aktivierung der Wegfahrsperre oder Ähnliches erfolgen. Sie kann aber auch relativ sein und dem Zweck dienen, den Fahrer unmissverständlich darüber zu informieren, dass er von dem Fahrzeug nicht das gewohnte Fahrverhalten erwarten darf und gegebenenfalls bei weiterem Betrieb Komponenten des Fahrzeugs dauerhaft beschädigen kann oder zumindest mit erhöhtem Verschleiß rechnen muss.

Es kann auch sinnvoll sein, die absolute und die relative Unterbindung zu kombinieren und beispielsweise die mögliche Weiterfahrt auf eine bestimmte Strecke oder Zeit zu begrenzen und/oder den Weiterbetrieb des Fahrzeugs z.B. von der Bestätigung einer Servicemeldung im Fahrzeugdisplay abhängig zu machen, in dem der Fahrer über die möglichen Konsequenzen des Weiterbetriebs informiert wird und beispielsweise einem Ausschluss der Gewährleistung für Folgeschäden durch Bestätigung zustimmt.

Schließlich kann vorteilhaft vorgesehen sein, dass die Schaltstrategie gemäß Anspruch 1 beinhaltet, dass das Getriebe in einem möglichst kleinen Gang geschaltet wird. Da ein kleiner Gang bei gegebener Getriebeabtriebsdrehzahl mit vergleichsweise hohen Drehzahlen an der Getriebeeingangswelle verbunden ist, können ausgehend von dieser hohen Drehzahl höhere Gänge durch Abbremsung der Getriebeeingangswelle synchronisiert und damit bei Abbremsung über eine Getriebebremse problemlos geschaltet werden. Nähert sich das Fahrzeug der für diesen Gang vorgesehenen Grenzgeschwindigkeit, so kann daher problemlos in den nächsthöheren Gang geschaltet werden. Die Motordrehzahl wird sich auch im neuen Gang zumindest noch im mittleren Drehzahlbereich befinden, wodurch die Chancen auf ein akzeptables vom Antriebsmotor bereitgestelltes Drehmoment steigen.

Verzögert das Fahrzeug dagegen, so erhöht eine frühe Rückschaltung die Chancen darauf, dass die Drehzahl des Antriebsmotors trotz des'fehlerhaften Betriebs bei niedrigen Drehzahlen auf einem vergleichsweise hohen Niveau gehalten werden und auch noch bis zur Synchrondrehzahl des Zielganges gesteigert werden kann. Sofern es zumindest gelingt, eine mittlere Drehzahl des Antriebsmotors zu halten, kann abgewartet werden, bis das Fahrzeug durch Ausrollen so langsam geworden ist, dass für den niedrigeren Gang zumindest annähernd eine Synchrondrehzahl vorliegt.

Ein Zurückschalten bei relativ geringen gangbezogenen Fahrzeuggeschwindigkeiten würde dagegen dazu führen, dass die Drehzahl des Antriebsmotors bei Einlegen des neuen Ganges relativ niedrig ist. Bei den hier betrachteten Fehlerzuständen, bei denen insbesondere die Fähigkeit des Antriebsmotors zur Steigerung der Drehzahl und zur Abgabe eines Drehmomentes bei niedrigen Drehzahlen eingeschränkt ist, wäre dies sehr unvorteilhaft.

Die Erfindung lässt sich anhand eines Ausführungsbeispiels weiter erläutern. Es wird hier beispielhaft davon ausgegangen, dass ein Personenkraftwagen mit einem üblichen Verbrennungsmotor und einem automatisch schaltenden Getriebe mit mehreren diskreten Gängen versehen ist und im dritten Gang mit einer Geschwindigkeit von 70 Kilometer pro Stunde fährt. Das Getriebe verwendet zum Abbremsen der Getriebeeingangsseite auf annähernd Synchronisationsdrehzahl eine getriebeinterne Bremse.

Zur Beschleunigung der Getriebeeingangsseite bei Rückschaltvorgängen wird bei in Neutral geschaltetem Getriebe die Fahrkupplung automatisch geschlossen und der Antriebsmotor des Fahrzeugs erhält von der Getriebesteuerung über die Motorsteuerung ein Signal zur Erhöhung der Drehzahl bis auf die gewünschte Synchrondrehzahl. Wenn die Synchrondrehzahl erreicht ist, wird der Gang eingelegt.

An einer Fahrwegsteigung gibt die Getriebesteuerung anschließend ein Signal an diesbezügliche Aktuatoren, in den zweiten Gang zu schalten. Hierfür wird das Getriebe zunächst in die Neutralstellung gebracht, anschließend die Fahrkupplung zwischen Motor und Getriebe geschlossen und ein Signal an den Motor zur Anhebung der Drehzahl bis zur Synchrondrehzahl gegeben. Da in diesem Beispielfall jedoch ein technischer Defekt im Bereich des Motors oder der Motorsteuerung vorliegt, läuft der Motor im Leerlauf oder ohne Last unrund und würde nach einigen Sekunden stehen bleiben. Eine Erhöhung der Drehzahl aus diesem Betriebszustand heraus ist nicht möglich und das an der Kurbelwelle abnehmbare Drehmoment ist minimal.

Da das Fahrzeug mit einer erfindungsgemäßen Regelung bzw. Steuerung ausgestattet ist, überwacht die Getriebesteuerung nach Auslösung des Signals zur Anhebung der Motordrehzahl den Verlauf der Motordrehzahl und stellt nach einer angemessenen Zeitspanne fest, dass noch keine Erhöhung der Motordrehzahl zu verzeichnen ist.

Daraufhin wird die Steuerungsstrategie gemäß der Erfindung aktiviert und mit Hilfe einer Grenzwerttabelle ermittelt, welche Gänge bei den momentan vorliegenden Drehzahlen an der Eingangswelle und Ausgangswelle des Getriebes noch schaltbar sind, ohne die Drehzahl der Eingangswelle mit Motorkraft erhöhen zu müssen. Dabei werden ausgedehntere Drehzahlfenster für die Synchronisation zu Grunde gelegt, als dies im Normalbetrieb der Fall wäre.

In diesem Fall wird eine vergleichsweise große Abweichung von der Synchrondrehzahl gestattet. Ausgehend von diesen Randbedingungen wird festgestellt, dass es aufgrund des erweiterten Drehzahlfensters möglich ist, den dritten Gang wieder einzulegen. Dieses wird dann auch vollzogen. Das Fahrzeug fährt nun wieder im dritten Gang und der Motor ist, nachdem er durch die Schwungmasse des Fahrzeugs wieder beschleunigt worden ist, passiv in der Lage, erneut Leistung an Nebenaggregate, wie beispielsweise eine Lenkhilfepumpe abzugeben.

Da sich das Fahrzeug jedoch an einer Steigung befindet, erwartet der Fahrer einen Rückschaltvorgang. Zudem hat er den Wechsel in die Neutralstellung des Getriebes sowie das erneute Einlegen des dritten Ganges als Ruckeln und auch akustisch am Motorgeräusch registriert, und tritt unwillkürlich auf das Fahrpedal, um den abgebrochenen Gangwechsel zu erzwingen. Dies wird jedoch durch die Steuerung unterbunden, da durch einen erneuten Schaltversuch das Fahrzeug so langsam werden könnte, dass das Wiedereinlegen des dritten Ganges möglicher Weise nicht erneut gelingen würde.

Beim nächsten Halt des Fahrzeugs wird das Getriebe automatisch in dessen Neutralstellung gebracht und ein Wiederanfahren verhindert. Probehalber wird von der Getriebesteuereinheit jedoch ein Signal zur Anhebung der Motordrehzahl an die Motorsteuerung übermittelt. Da die Motordrehzahl anschließend nicht wie an sich erwartet ansteigt, kann der Normalbetrieb nicht wieder aufgenommen werden. Der Fahrer erhält auf dem Multifunktionsdisplay eine aussagekräftige Fehlerbeschreibung. Er kann das Fahrzeug jedoch erneut starten und in Betrieb setzen, wenn er zuvor durch Druck einer Bestätigungstaste bestätigt, dass er zur Kenntnis genommen hat, dass dieses weitere Schäden am Antriebsmotor und einen erhöhten Verschleiß am Getriebe hervorrufen kann. Auf diese Weise kann er die relativ kurze Strecke bis zur nächsten Werkstatt auch ohne Abschleppen zurücklegen.

## Patentansprüche

1. Verfahren zur Steuerung eines zumindest teilweise unsynchronisierten Schaltgetriebes, welches während eines Übersetzungsänderungsvorgangs die Erhöhung einer Drehzahl zumindest eines zu synchronisierenden Getriebeteils **dadurch** realisiert, dass zumindest ein Element des Getriebes über eine schaltbare Kupplung mit einem Antriebsmotor verbunden wird und dieser Antriebsmotor die erforderliche Drehzahl sowie das benötigte Drehmoment an seiner Abtriebswelle zur Verfügung stellt, **dadurch gekennzeichnet, dass** in dem Fall, in dem die vom Antriebsmotor bereitgestellte Drehzahl und/oder das bereitgestellte Drehmoment innerhalb eines festgelegten Zeitraumes nicht ausreicht, um die Synchronisierung des Schaltgetriebes zu gewährleisten, eine Schaltstrategie verfolgt wird, welche ein unbeabsichtigtes Verharren des Schaltgetriebes in dessen Neutralstellung verhindert.

2. Verfahren nach Anspruch 1, **dadurch gekennzeichnet, dass** innerhalb dieser Schaltstrategie ausgehend von den aktuellen Drehzahlverhältnissen an der Eingangswelle und der Ausgangswelle des Schaltgetriebes ein schaltbarer Gang ermittelt und dieser Gang eingelegt wird.

3. Verfahren nach einem der Ansprüche 1 oder 2, **dadurch gekennzeichnet, dass** das Drehzahlfenster, in welchem das Einlegen eines Ganges erlaubt wird, gegenüber dem Normalbetrieb vergrößert wird.

4. Verfahren nach einem der Ansprüche 1 bis 3, **dadurch gekennzeichnet, dass** innerhalb dieser Schaltstrategie ein erneuter Gangwechsel durch den Fahrer zumindest gegenüber dem Normalbetrieb zumindest erschwert und/oder ganz unterbunden wird.

5. Verfahren nach wenigstens einem der vorherigen Ansprüche, **dadurch gekennzeichnet, dass** innerhalb dieser Schaltstrategie der Antriebsstrang geöffnet wird, wenn das Fahrzeug Grenzgeschwindigkeiten unterschreitet und/oder die Bremsstärke einen vorgegebenen Wert überschreitet.

6. Verfahren nach wenigstens einem der vorherigen Ansprüche, **dadurch gekennzeichnet, dass** die Schaltstrategie beinhaltet, dass in einem sicheren Fahrzeugbetriebszustand der Antriebsstrang geöffnet und durch eine erneute Beschleunigungsanforderung an den Antriebsmotor überprüft wird, ob dieser zur Synchronisation des Getriebes ausreichend reagiert, und dass bei nicht ausreichender Reaktion des Antriebsmotors auf die Beschleunigungsanforderung ein erneutes Anfahren des Fahrzeugs unterbunden wird.

7. Verfahren nach wenigstens einem der vorherigen Ansprüche, **dadurch gekennzeichnet, dass** die Schaltstrategie beinhaltet, dass das Getriebe in einem möglichst kleinen Gang geschaltet wird.

## Claims

1. Method for controlling a mechanical transmission which is at least partially unsynchronized and which during ratio change realizes the increased speed of at least one transmission part to be synchronized through connection of at least one element of the transmission via a controllable dutch with a driving engine and through provision by this driving engine of the required speed and torque on its output shaft, **characterized in that** if the speed and/or torque provided by the driving engine within a fixed period is not sufficient to ensure synchronization of the mechanical transmission, a shifting strategy will be pursued which will prevent the mechanical transmission from remaining in neutral position when this is unwanted.

2. Method according to claim 1, **characterized in that** the shifting strategy determines a shiftable gear on the basis of the current speed conditions on input shaft and output shaft of the mechanical transmission, and that this gear is engaged.

3. Method according to one of the claims 1 or 2, **characterized in that** the speed window within which engagement of a gear is permitted is expanded compared to normal operation.

4. Method according to one of the claims 1 through 3, **characterized in that** the shifting strategy at least impedes and/or prevents renewed gear change by the driver, at least compared to normal operation.

5. Method according to at least one of the preceding claims, **characterized in that** this shifting strategy opens the driveline when the vehicle speed drops below limit speeds and/or the brake force exceeds a specified value.

6. Method according to at least one of the preceding claims, **characterized in that** the shifting strategy implies that the driveline is opened in a safe vehicle operating condition, and that a renewed acceleration request received by the driving engine entails a check as to whether it will respond adequately to the synchronization of the transmission, and that renewed starting of the vehicle will be prevented if the driving engine's response to the acceleration request is inadequate.

7. Method according to at least one of the preceding claims, **characterized in that** the shifting strategy implies that the transmission is shifted in a smallest-possible gear.

## Revendications

1. Procédé de commande d'une boîte de vitesses mécanique étant au moins partiellement non-synchronisée, dans laquelle - pendant un processus de variation du rapport de démultiplication - l'augmentation d'un régime d'au moins une partie à synchroniser de la boîte de vitesses est réalisée de façon à ce que au moins un élément de la boîte de vitesses est lié par un embrayage couplable à un moteur d'entraînement, ce moteur d'entraînement transmettant le régime et le couple nécessaires par l'intermédiaire de son arbre de sortie, **caractérisé en ce que** dans le cas où le régime et/ou le couple fournis par le moteur d'entraînement dans un laps de temps défini ne suffit pas pour garantir la synchronisation de la boîte de vitesses mécanique, est activée une stratégie de changement de vitesse empêchant que la boîte de vitesses mécanique demeure involontairement dans sa position de point mort

2. Procédé selon la revendication 1, **caractérisé en ce que** à l'aide de cette stratégie de changement de vitesses est déterminé, à partir du régime momentané sur l'arbre d'entrée et sur l'arbre de sortie de la boîte de vitesses mécanique, un rapport engageable, et **en ce que** ce rapport est ensuite engagé.

3. Procédé selon une des revendications 1 ou 2, **caractérisé en ce que** la plage de régime dans laquelle l'engagement du rapport est autorisé, est élargie par rapport à la plage de régime de fonctionnement normal.

4. Procédé selon une des revendications 1 à 3, **caractérisé en ce que** à l'aide de cette stratégie de changement de vitesses, au moins par rapport au fonctionnement normal, est rendu plus difficile et/ou inhibé un autre changement de rapport par le chauffeur.

5. Procédé selon au moins une des revendications précédentes, **caractérisé en ce que** à raide de cette stratégie de changement de vitesses la chaîne cinématique est ouverte lorsque la vitesse du véhicule se situe en-dessous d'un seuil prédéfini et/ou la puissance de freinage dépasse une valeur de consigne.

6. Procédé selon au moins une des revendications précédentes, **caractérisé en ce que** la stratégie de changement de vitesses est définie de manière à ce que la chaîne cinématique est ouverte lorsque le véhicule se trouve dans un état de fonctionnement sûr et **en ce que** par une autre requête d'accélération envoyée au moteur d'entraînement le système vérifie si la réaction du moteur d'entraînement est adéquate pour effectuer la synchronisation, et **en ce que** en cas d'une réaction du moteur d'entraînement inadéquate à la requête d'accélération, le système inhibe tout autre démarrage du véhicule.

7. Procédé selon au moins une des revendications précédentes, **caractérisé en ce que** la stratégie de changement de vitesses est définie de manière à ce que le changement de rapport est effectué dans un rapport le plus petit possible.
